# EUROPÄISCHE PATENTSCHRIFT

(11) **EP 2 651 584 B1**
(45) Veröffentlichungstag und Bekanntmachung des Hinweises auf die Patenterteilung: **21.09.2016**
(21) Anmeldenummer: 11794057.7
(22) Anmeldetag: 09.12.2011
(51) Int. Cl.: B23G 1/16, B23G 7/00

(54) **VERFAHREN ZUM HERSTELLEN EINES GEWINDES IN EINEM WERKSTÜCK**
PROCESS FOR PRODUCING A THREAD IN A WORKPIECE
PROCÉDÉ POUR PRODUIRE UN TARAUDAGE DANS UNE PIÈCE D'OEUVRE

(30) Priorität: 14.12.2010 DE 102010054476
(43) Veröffentlichungstag der Anmeldung: 23.10.2013
(73) Patentinhaber: Audi AG, 85045 Ingolstadt (DE)
(72) Erfinder: KOPTON, Peter, 85092 Kösching (DE)
(86) Internationale Anmeldenummer: PCT/EP2011/006194
(87) Internationale Veröffentlichungsnummer: WO 2012/079728

(56) Entgegenhaltungen:
- EP-A1- 2 218 536
- DE-B- 1 176 450
- US-A- 3 359 581

## Beschreibung

Die Erfindung betrifft ein Verfahren zum Herstellen eines Gewindes in einem Werkstück.

Zur Gewindeerzeugung oder Gewindenachbearbeitung sind sowohl spanabhebende als auch spanlose Verfahren und Gewindewerkzeuge bekannt. Spanabhebende Gewindeerzeugung beruht auf Materialabtrag des Materials des Werkstücks im Bereich des Gewindeganges. Spanlose Gewindeerzeugung beruht auf einer Umformung des Werkstücks und Erzeugung des Gewindeganges in dem Werkstück durch Druck. Einen Überblick über im Einsatz befindliche Gewindeerzeugungswerkzeuge und Arbeitsverfahren gibt das Handbuch der Gewindetechnik und Frästechnik, Herausgeber: EMUGE-FRANKEN, Verlag: Publicis Corporate Publishing, Erscheinungsjahr: 2004(ISBN3-89578-232-7), im Folgenden nur als "EMUGE-Handbuch" bezeichnet.

Unter die spanabhebenden oder spanenden Gewindeerzeugung fallen die Gewindebohrer (vgl. EMUGE-Handbuch, Kapitel 8, Seiten 181 bis 298*)* und die Gewindefräser (vgl. EMUGE-Handbuch, Kapitel 10, Seiten 325 bis 372*)* sowie, nur für Außengewinde, die Schneideisen (vgl. EMUGE-Handbuch, Kapitel 11, Seiten 373 bis 404*).*

Ein Gewindebohrer ist ein Gewindeschneidwerkzeug, dessen Schneiden oder Gewindeschneidzähne entlang eines Außengewindes unter der Gewindesteigung des zu erzeugenden Gewindes angeordnet sind. Beim Erzeugen des Gewindes wird der Gewindebohrer mit zur Werkzeugachse axialem Vorschub und unter Drehung um seine Werkzeugachse mit von der axialen Vorschubgeschwindigkeit entsprechend der Gewindesteigung abhängiger Drehgeschwindigkeit in ein zylindrisches Kernloch in einem Werkstück bewegt, wobei die Werkzeugachse des Gewindebohrers koaxial zur Mittelachse des Kernloches ausgerichtet wird und seine Schneiden permanent mit dem Werkstück an der Kernlochwandung in Eingriff sind (kontinuierlicher Schnitt), so dass ein durchgehender Gewindegang an der Kernlochwandung entsteht.

Unter die spanlosen Gewindeerzeugungswerkzeuge fallen die sogenannten Gewindefurcher (vgl. EMUGE-Handbuch, Kapitel 9, Seiten 299 bis 324) und, nur für Außengewinde, die Gewindewalzwerkzeuge (vgl. EMUGE-Handbuch, Kapitel 11, Seiten 373 bis 404)

Gewindefurcher sind Gewindewerkzeuge mit einem annähernd spiral- oder schraubenförmig umlaufenden Gewindeprofil, entlang dem mehrere Drückstollen (auch als Formzähne, Furchzähne oder Formkeile bezeichnet) angeordnet sind, die durch zueinander versetzte weiter nach außen ragende und im Allgemeinen abgerundete Polygon-Eckbereiche eines annähernd polygonalen Querschnittes des Gewindefurchers gebildet sind. Beim Erzeugen des Gewindes wird der Gewindefurcher ähnlich wie der Gewindebohrer mit zur Werkzeugachse axialem Vorschub und unter Drehung um seine Werkzeugachse in ein zylindrisches Kernloch in einem Werkstück bewegt, wobei die Werkzeugachse des Gewindebohrers koaxial zur Mittelachse des Kernloches ausgerichtet wird. Die Drehgeschwindigkeit und die axiale Vorschubgeschwindigkeit werden entsprechend der Gewindesteigung aufeinander abgestimmt. Die Drückstollen des Gewindefurchers sind permanent mit dem Werkstück an der Kernlochwandung in Eingriff und drücken den Gewindegang durch plastische Verformung in die Kernlochwandung, so dass ein durchgehender Gewindegang an der Kernlochwandung entsteht.

Ferner sind ausschließlich spanabhebend arbeitende Kombinationswerkzeuge aus Bohrer und Gewindefräser bekannt, nämlich der sogenannte Bohrgewindefräser (BGF) (vgl. *EMUGE-Handbuch, Kapitel 10, Seite 354*) und der sogenannte Zirkularbohrgewindefräser (ZBGF) ((vgl. *EMUGE*-*Handbuch*, *Kapitel 10, Seite 355*)*,* mit denen zunächst das Kernloch für das Gewinde und dann das Gewinde in dem Kernloch erzeugt werden können.

Der Werkzeugschaft der genannten Gewindeerzeugungswerkzeuge ist in der Regel wenigstens annähernd zylindrisch um seine Längsachse ausgeführt und/oder mit seinem vom Werkstück abgewandten Ende im Spannfutter einer Werkzeugmaschine aufgenommen und gehalten. Die in die erzeugten Innengewinde eingeschraubten bekannten Schrauben oder Schraubgewinde umfassen zu den Innengewinden komplementäre durchgehende helikale Außengewinde.

DE 1 176 450 B offenbart ein Verfahren zum Herstellen eines Gewindes in einem Werkstück mit den Merkmalen des Oberbegriffs des Anspruchs 1. Es ist nun Aufgabe der Erfindung, ein neues Verfahren zur Erzeugung eines Gewindes, insbesondere zur Erzeugung eines Innengewindes, anzugeben.

Diese Aufgabe wird mit den Merkmalen des Anspruchs 1 gelöst. Vorteilhafte Ausgestaltungen und Weiterbildungen des Verfahrens gemäß der Erfindung ergeben sich aus den vom Patentanspruch 1 abhängigen Patentansprüchen.

Das Verfahren zum Herstellen eines Gewindes in einem Werkstück gemäß Patentanspruch 1 umfasst die folgenden Verfahrensschritte:
a) Erzeugen einer Anzahl n ≥ 1 von Nuten in einer eine Gewindeachse umlaufenden Wandung des Werkstückes oder
   Erzeugen einer eine Anzahl n ≥ 1 von Nuten aufweisenden und eine Gewindeachse umlaufenden Wandung des Werkstückes,
b) Einführen von jeweils einem Gewindeerzeugungsbereich eines Gewindeerzeugungswerkzeuges in jede der Nuten in der Wandung des Werkstücks in Richtung entlang der zugehörigen Nut, wobei der Gewindeerzeugungsbereich in zur Gewindeachse radialer Richtung in die zugehörige Nut unter Einhaltung eines radialen Abstandes (Δr) zum Nutgrund ragt,
c) Erzeugen eines Gewindes in jedem an die Nut(en) angrenzenden Wandungsteilbereich der Wandung des Werkstücks durch Drehen des Gewindeerzeugungswerkzeuges um die Gewindeachse um einen vorgegebenen Drehwinkel und gleichzeitigen axialen Vorschub des Gewindeerzeugungswerkzeuges koaxial zur Gewindeachse mit einer an die Drehgeschwindigkeit der Drehbewegung und die Gewindesteigung angepassten axialen Vorschubgeschwindigkeit, wobei während der Drehung und dem gleichzeitigen axialen Vorschub jeder Gewindeerzeugungsbereich in den zugehörigen Wandungsteilbereich eingreift und einen zugehörigen Teil eines Gewindeganges erzeugt und nach der Drehung wieder in dieselbe Nut oder eine andere Nut in der Wandung ragt,
d) Herausbewegen jedes Gewindeerzeugungsbereiches des Gewindeerzeugungswerkzeuges aus der zugehörigen Nut in Richtung entlang der Nut,
e) wobei die n Nuten in einem gleichen Winkelabstand von 360°/n zueinander erzeugt werden und
f) wobei der Drehwinkel 720°/n oder 1080°/n beträgt.

Ein Vorteil dieses Verfahrens gemäß der Erfindung gegenüber bekannten Gewindeschneid- oder Gewindefurchverfahren besteht darin, dass das Gewindeerzeugungswerkzeug nicht einen üblicherweise bei Gewindebohrern oder Gewindefurchern vorhandenen Anlaufkegel oder Anschnittbereich mehr aufweisen muss, in dem der maximale radiale Abstand der Gewindezähne oder Drückstollen entlang einer Kegelfläche vom Ende des Gewindebohrers oder Gewindefurchers hin zunimmt. Dadurch kann auch bei einem Sackloch axial ein vollständiger Gewindegang entlang einer größeren Gewindelänge erzeugt werden, da der unvollständige Gewindegang, der über die Länge des Anschnittbereichs oder Anlaufkegels entstehen würde, wegfällt. Ferner können die Gewindeerzeugungswerkzeuge kürzer ausgebildet werden, was neben anderen Vorteilen insbesondere auch bei kleinen Arbeitshöhen positiv auswirkt.

Mit dem Verfahren gemäß der Erfindung kann ferner im Vergleich zu den bekannten Verfahren gemäß dem Stand der Technik das Gewindewerkzeug aufgrund der (nur) axialen Einführbewegung sehr schnell von außen in seine Arbeitsposition an die Wandung des Werkstücks geführt werden, sodann das Gewinde mit einem wesentlich kleineren Drehwinkel oder mit wesentlich weniger Umdrehungen hergestellt werden und schließlich nach Erzeugen des Gewindes das Gewindewerkzeug aufgrund der (nur) axialen Abführbewegung sehr schnell nach außen von der Wandung des Werkstücks weg geführt werden. Beim Gewindebohren oder Gewindefurchen gemäß dem Stand der Technik sind immer mehrere Umdrehungen des Gewindebohrers oder Gewindefurchers notwendig und zwar zunächst beim Eindrehen und dann noch einmal beim Zurückdrehen des Werkzeugs. Beim Verfahren gemäß der Erfindung kann eine Umdrehung oder sogar nur ein Teil einer Umdrehung genügen, kombiniert mit axialen Zuführ- und Abführbewegungen. Die für das Erzeugen der Nuten erforderliche zusätzliche Zeit ist dabei in der Regel kleiner als die Zeitersparnis beim Gewindeerzeugen.

Ferner kann das Gewinde gemäß der Erfindung bezüglich seiner axialen Position und bezüglich des Gewindeanfangs stellungsgenau eingebracht werden. Die Nuten stellen definierte Positionen für das Gewinde dar.

Die Nut(en) verläuft (verlaufen) im Wesentlichen axial und/oder parallel zur Gewindeachse.

Bevorzugt wird jede Nut spanabhebend erzeugt, insbesondere mit einem in Richtung der Nut bewegten Räum- oder Hobelwerkzeug wie einer Räumnadel oder auch mit einem Nutfräser.

In einer ersten Variante ist wenigstens ein Gewindeerzeugungsbereich ist ein Gewindeformbereich und erzeugt seinen Teil des Gewindeganges formend und damit spanlos. Insbesondere weisen wenigstens ein Teil der Gewindeerzeugungsbereiche auf einer dem zu erzeugenden Gewinde in der Gewindesteigung entsprechenden Schraubenlinie um die Werkzeugachse angeordnete Gewindedrückstollen auf, die innerhalb des Gewindeerzeugungsbereiches radial am Weitesten nach außen ragen. In einer zweiten, auch mit der ersten Variante kombinierbaren Variante ist wenigstens ein Gewindeerzeugungsbereich ist ein Gewindeschneidbereich und erzeugt seinen Teil des Gewindeganges spanabhebend. Insbesondere weisen wenigstens eine Teil der Gewindeerzeugungsbereiche auf einer dem zu erzeugenden Gewinde in der Gewindesteigung entsprechenden Schraubenlinie um die Werkzeugachse angeordnete Gewindeschneidzähne auf, die innerhalb des Gewindeerzeugungsbereiches radial am Weitesten nach außen ragen. An die Gewindeschneidzähne schließen sich im Allgemeinen in Richtung entgegengesetzt zur Schneidrichtung oder Drehrichtung vorzugsweise äußere Freiflächen an.

Die Gewindeerzeugungsbereiche des Gewindeerzeugungswerkzeugs ragen im Allgemeinen radial weiter nach außen als die übrigen Außenflächen des Gewindeerzeugungswerkzeugs.

Die Wandung des Werkstückes, in der das Gewinde erzeugt wird, ist bevorzugt eine Kernlochwandung eines Kernloches, insbesondere eines Sackloches oder eines Durchgangsloches, in dem Werkstück, so dass das Gewinde ein Innengewinde ist. Es ist aber auch die Erzeugung eines Außengewindes an einer äußeren Wandung des Werkstücks möglich.

Im Folgenden handelt es sich nicht um Ausführungsbeispiele der Erfindung, sondern Beispiele, die das Verständnis der Erfindung erleichtern.

Dabei wird auch auf die Zeichnung Bezug genommen, in deren
- FIG 1: ein Kernloch in einem Werkstück in einer Schnittdarstellung,
- FIG 2: das Kernloch gemäß FIG 1 mit zwei in einem ersten Verfahrensschritt erzeugten Nuten in einer Schnittdarstellung,
- FIG 3: das Kernloch gemäß FIG 2 mit in einem zweiten Verfahrensschritt eingebrachtem Gewindewerkzeug mit zwei in den Nuten befindlichen Gewindeerzeugungsbereichen in einer Schnittdarstellung,
- FIG 4: das Kernloch gemäß FIG 3 mit eingebrachtem Gewindewerkzeug, das in einem dritten Verfahrensschritt um einen Drehwinkel gedreht und mit axialem Vorschub bewegt wird, wobei die Gewindeerzeugungsbereiche einen Teil eines Gewindeganges erzeugt haben, in einer teilweisen Schnittdarstellung,
- FIG 5: das Kernloch gemäß FIG 3 und 5 mit eingebrachtem Gewindewerkzeug, das in dem dritten Verfahrensschritt um den vollen Drehwinkel gedreht und mit axialem Vorschub bewegt wurde, wobei die Gewindeerzeugungsbereiche den vollständigen Gewindegang erzeugt haben, in einer teilweisen Schnittdarstellung,
- FIG 6: ein Werkstück mit einem Kernloch mit zwei Nuten und fertig erzeugtem Gewinde zwischen den Nuten in einer perspektivischen Darstellung,
- FIG 7: das Kernloch gemäß FIG 6 in einer Draufsicht und
- FIG 8: das Kernloch gemäß FIG 7 in einer Schnittdarstellung gemäß der Linie VIII-VIII in FIG 7
jeweils schematisch dargestellt sind. Einander entsprechende Teile und Größen sind in den FIG 1 bis 8 mit denselben Bezugszeichen versehen.

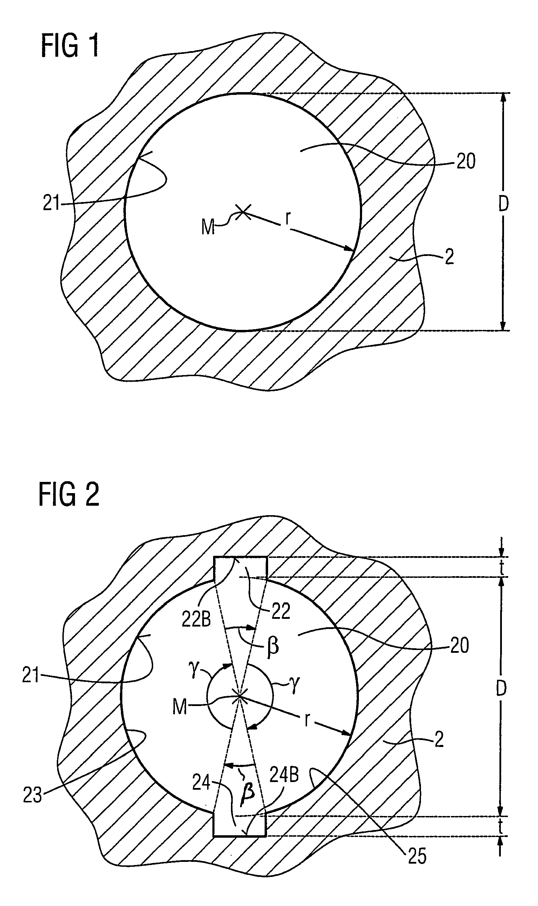

FIG 1 zeigt ein Kernloch 20 in einem Werkstück 2 in einem Schnitt, wobei das Kernloch 20 eine um eine Mittelachse M umlaufende zylindrische Kernlochwandung 21 aufweist mit dem Durchmesser D. Die zur Mittelachse M radiale Richtung ist mit einem Pfeil und dem Bezugszeichen r versehen. Das Kernloch 20 wird vorzugsweise spanabhebend erzeugt, insbesondere mit einem Bohrwerkzeug oder einem Fräswerkzeug

Gemäß FIG 2 werden nun in der Kernlochwandung 21 zwei axiale Nuten 22 und 24 erzeugt, die parallel zueinander und zur Mittelachse M und diametral zur Mittelachse M an entgegen gesetzten Seiten, also insbesondere um 180° versetzt zueinander, ausgebildet und angeordnet sind. Die vom Außendurchmesser oder von der ursprünglichen zylindrischen Kernlochwandung 21 des Kernloches 20 gemessenen Tiefen der Nuten 22 und 24 sind mit t bezeichnet und bei beiden Nuten 22 und 24 vorzugsweise gleich. Der radial außen liegende Nutgrund der Nut 22 ist mit 22B und entsprechend der Nutgrund der Nut 24 mit 24B bezeichnet. Ein zwischen den Nuten 22 und 24 in FIG 2 gegen den Uhrzeigersinn verlaufender Wandungsteilbereich der Kernlochwandung 21 ist mit 23 bezeichnet und ein auf der anderen Seite zwischen den Nuten 22 und 24 liegender Wandungsteilbereich mit 25.

Der dem Umfangsanteil entsprechende Winkelanteil β einer Nut 22 oder 24 am Gesamtumfang des Kernloches 20 und dessen Kernlochwandung also 360° beträgt zwischen 2 % und 12,5 %, vorzugsweise zwischen 7,5 % und 10 % oder, in Winkelgraden angegeben, zwischen 7,2° und 45°, vorzugsweise zwischen 27° und 36°. Bei einem schneidenden Gewindeerzeugungswerkzeug , z.B. Gewindebohrer, kann dabei der Winkelanteil β der Nuten 22 auch kleiner sein als bei einem formenden oder furchenden Gewindewerkzeug wie z.B. einem Gewindefurcher. Der dem verbleibenden Umfangsanteil entsprechende Winkelanteil γ jedes Wandungsteilbereichs 23 und 25 ist dann (360° - 2β)/2 = 180° - β.

Die Erzeugung der Nuten 22 und 24 kann spanabhebend erfolgen, insbesondere mit einer Räumnadel oder einem Fräser.

Grundsätzlich kann auch gleich das Kernloch 20 zusammen mit den Nuten 22 und 24 in einem Verfahrensschritt erzeugt werden, insbesondere spanabhebend, beispielsweise mit einem Fräswerkzeug.

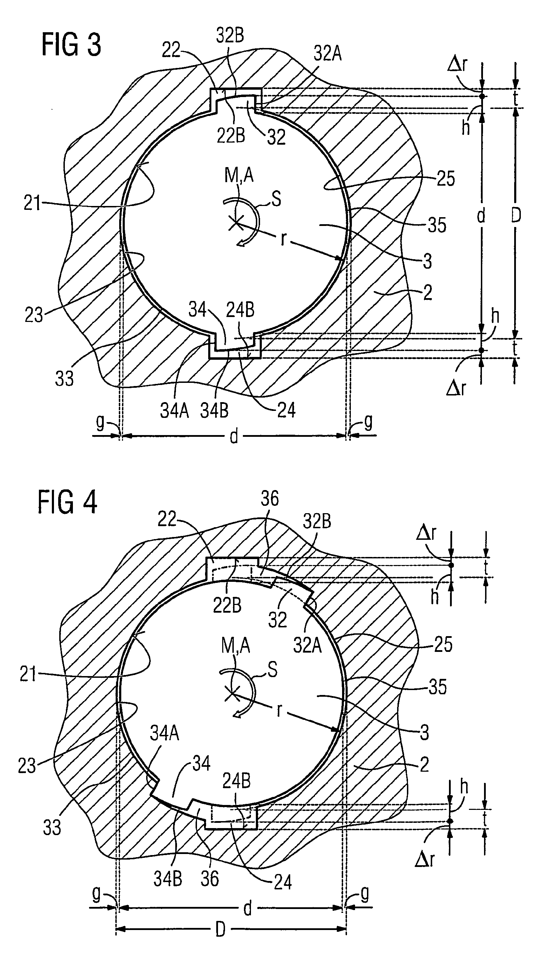

Gemäß FIG 3 wird nun ein um seine Werkzeugachse A drehbares Gewindeerzeugungswerkzeug 3 mit zur Mittelachse M des Kernloches 20 koaxialen Werkzeugachse A in das Kernloch 20 eingeführt. Das Gewindeerzeugungswerkzeug 3 weist zwei diametral zur Werkzeugachse A oder um 180° versetzt zueinander angeordnete Gewindeerzeugungsbereiche 32 und 34 auf und zwischen den Gewindeerzeugungsbereichen 32 und 34 zwei insbesondere zylindrische Außenflächen 33 und 35.

Die Gewindeerzeugungsbereiche 32 und 34 ragen radial weiter nach außen als die Außenflächen 33 und 35. Der Durchmesser des Gewindeerzeugungswerkzeugs 3 von Außenfläche 33 zu Außenfläche 35 ist mit d bezeichnet. Die Gewindeerzeugungsbereiche 32 und 34 weisen auf einer dem zu erzeugenden Gewinde in der Gewindesteigung entsprechenden Spirale oder Schraubenlinie um die Werkzeugachse A angeordnete Gewindeschneidzähne 32A bzw. 34A (von denen in FIG 2 jeweils nur einer im Schnitt zu sehen ist) und sich an die Gewindeschneidzähne 32A bzw. 34A anschließende äußere Freiflächen 32B und 34B auf. In FIG 2 sind die Gewindeschneidzähne 32A und 34A in einer Drehrichtung S um die Werkzeugachse A gesehen vorne angeordnet und verlaufen die Freiflächen 32B und 34B von den Gewindeschneidzähnen 32A und 34A jeweils nach hinten. Die Gewindeschneidzähne 32A und 34A sind die radial am Weitesten nach außen ragenden Bereiche der Gewindeerzeugungsbereiche 32 und 34 des Gewindeerzeugungswerkzeugs 3. Die radiale Höhe des Gewindeschneidzahns 32A oder 34A gegenüber dem sonstigen Außenumfang des Gewindeerzeugungswerkzeugs 3, also insbesondere gegenüber dessen Außenflächen 33 und 35, ist mit h bezeichnet und bevorzugt bei beiden Gewindeerzeugungsbereichen 32 und 34 gleich.

Der radiale Abstand der Gewindeschneidzähne 32A und 34A zum jeweiligen Nutgrund 22B bzw. 24B der jeweiligen Nut 22 oder 24 ist mit Δr bezeichnet und vorzugsweise ebenfalls gleich bei beiden Nuten 22 und 24.
Dieser radiale Abstand Δr ist typischerweise zwischen 1/3 und 1/2 der Nuttiefe t gewählt.

Der Gewindeerzeugungsbereich 32 ragt in radialer Richtung r in die Nut 22 und der Gewindeerzeugungsbereich 34 in die Nut 24. Es gilt also für die jeweiligen Abmessungen d < D und d/2 + h < D/2 + t.

Der radiale Abstand oder die Spaltbreite zwischen dem Wandungsteilbereich 23 der Kernlochwandung 21 und der zugewandten Außenfläche 33 des Gewindeerzeugungswerkzeugs 3 sowie dem Wandungsteilbereich 25 der Kernlochwandung 21 und der ihr zugewandten Außenfläche 35 des Werkzeugs 3 ist mit g bezeichnet und entspricht g = (D - d) / 2. Diese Spaltbreite g sowie auch der radiale Abstand Δr zwischen Freifläche 32B oder 34B und Nutgrund 22B bzw. 24B sind jeweils zum Zwecke der besseren Darstellung vergrößert dargestellt. Im Regelfall wird das Spiel zwischen dem Gewindeerzeugungswerkzeug 3 einerseits und der Kernlochwandung 21 des Kernlochs 20 oder den Nuten 22 und 24 andererseits kleiner bemessen sein. Bevorzugt ist 0,01 < g/D < 0,1, jedoch können auch andere Parameterverhältnisse gewählt werden.

FIG 4 zeigt nun das in der Drehrichtung S um einen Winkel α gegenüber der in FIG 3 gezeigten Stellung gedrehte Gewindeerzeugungswerkzeug 3 in dem Kernloch 20 des Werkstücks 2.

Zusätzlich zur Drehbewegung in der Drehrichtung S ist das Gewindeerzeugungswerkzeug 3 in einer axialen oder linearen Vorschubbewegung koaxial zur Werkzeugachse A und auch zur Mittelachse M nach innen in das Kernloch 20 bewegt, was im Schnitt in FIG 4 nicht zu erkennen ist.

Die Vorschubgeschwindigkeit dieser axialen Vorschubbewegung ist angepasst an die Drehgeschwindigkeit der Drehbewegung in der Drehrichtung S und die gewünschte Gewindesteigung P, derart dass in der gleichen Zeit, in der das Werkzeug 3 sich um eine volle Umdrehung oder einen Drehwinkel α = 360° dreht, der axiale Vorschub oder der axiale Weg genau der Gewindesteigung P entspricht. Die axiale Vorschubgeschwindigkeit entspricht also dem Produkt aus der Gewindesteigung P und der Drehfrequenz des Werkzeugs 3.

Durch die Drehbewegung um den Drehwinkel α des Gewindeerzeugungswerkzeugs 3 bei gleichzeitiger axialer Vorschubbewegung um den Weg P · α/ 360° wurde ein Teil des Gewindeganges 36 des Gewindes in der Kernlochwandung 21 des Kernlochs 20 erzeugt und zwar ausgehend von der Nut 22 in dem Wandungsteilbereich 25 und ausgehend von der Nut 24 in dem Wandungsteilbereich 23. Zur Verdeutlichung ist der gesamte schon erzeugte Teilbereich in einem Umlauf des erzeugten Gewindeganges 36 auch im dargestellten Schnitt in FIG 4 gezeigt.

Das Gewindeerzeugungswerkzeug 3 weist nun axial zu seiner Werkzeugachse A in den Gewindeerzeugungsbereichen 32 und 34 jeweils eine axiale Reihe von Gewindeschneidzähnen 32A und 34A auf, die axial zueinander versetzt angeordnet sind.

Entsprechend der Anzahl dieser Gewindeschneidzähne 32A und 34A in der jeweiligen Reihe wird bei einer halben Umdrehung um α = 180° des Gewindeerzeugungswerkzeugs 3 bei gleichzeitigem Vorschub um P/2 eine der Anzahl der Gewindeschneidzähne in einer axialen Reihe entsprechende Zahl von Gewindeumläufen des Gewindeganges 36 erzeugt, die jeweils durch die Nuten 22 und 24 unterbrochen sind. Die Gewindeschneidzähne 32A und 34A, die diametral unmittelbar gegenüber liegen, sind dabei jeweils um P/2 versetzt angeordnet, damit die beiden separat erzeugten halben Umläufe des Gewindegangs 36 im Wandungsbereich 23 und im Wandungsbereich 25 dann nach der Nut 22 und 24 entlang des gewünschten Gewindeverlaufs in der Schraubenlinie mit der Gewindesteigung P ineinander übergehen.

Die radiale Höhe h des Gewindeschneidzahns 32A oder 34A bestimmt dabei den Abstand des Gewindegrunds 36B des Gewindeganges 36 von der Kernlochwandung 21.

Eine Umdrehung des Werkzeugs 3 um den Abstandswinkel zwischen den Nuten 22 und 24 im Kernloch 20, im Bespiel der FIG 2 bis 4 180°, als gesamten Drehwinkel α deckt dabei die gesamten dazwischen liegenden Wandungsteilbereiche 23 und 25 ab, so dass in diesen der Gewindegang 36 vollständig erzeugt wird.

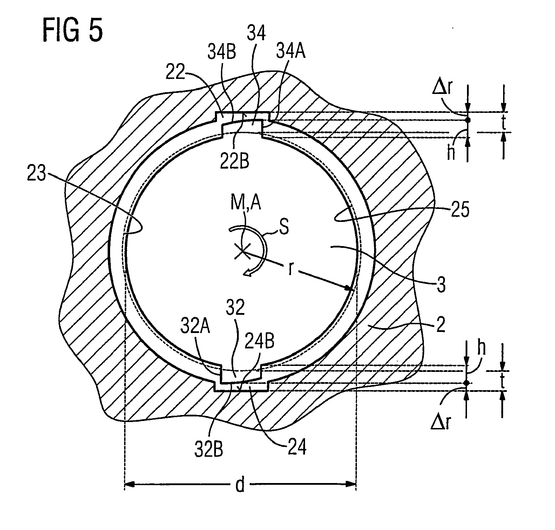

Der Zustand nach einer halben Umdrehung ist in FIG 5 gezeigt.

Der Gewindeerzeugungsbereich 32, der zuvor in die Nut 22 ragte, ragt nun in die diametral gegenüberliegende Nut 24 und der Gewindeerzeugungsbereich 34, der zuvor in die Nut 24 ragte, ragt nun in die Nut 22, beide unter dem radialen Abstand Δr zum Nutgrund 24B bzw. 22B.

Dadurch kann nun in einem weiteren nicht erfindungsgemäßen Verfahrensschritt das Gewindeerzeugungswerkzeug 3 axial zur Mittelachse M wieder aus dem Kernloch 20 herausgezogen werden, da die Gewindeerzeugungsbereiche 32 und 34 entlang der Nuten 24 und 22 ohne Beschädigung des erzeugten Gewindeganges 36 axial nach außen bewegt werden können.

Ein Vorteil dieses Verfahrens besteht darin, dass das Gewindeerzeugungswerkzeug 3, das letztendlich ein modifizierter Gewindebohrer ist, keinen Anlaufkegel oder Anschnittbereich aufweisen muss, in dem der maximale radiale Abstand der Gewindeschneidzähne entlang einer Kegelfläche vom Ende des Gewindebohrers hin zunimmt, um einen entsprechenden Zuwachs des Spans und der Eindringtiefe der Gewindeschneidzähne in die Werkstückoberfläche zu erreichen und den Schnittdruck nicht zu hoch werden zu lassen.

Beim Gewindeerzeugungswerkzeug 3, das mit seinen Gewindeerzeugungsbereichen 32 und 34 in die vorab erzeugten Nuten 22 und 24 eingreift, kann der Gewindegang vielmehr gleich in voller Gewindeprofiltiefe gemäß der radialen Höhe h der Gewindeschneidzähe 32A und 34A erzeugt werden und über die axiale Gewindelänge des Gewindes gesehen geht auch bei einem Sackloch als Kernloch 20 kein Teilbereich mit einem unvollständigen Gewindegang verloren, der ansonsten durch den Anschnitt oder Anlaufkegel des Gewindebohrers bei konventionellen Gewindebohrern entsteht. Der auch bei Umdrehung nur um 180° erzeugte Gewindegang 36 ist deshalb bei dem Verfahren vollständig, und zwar über seine gesamte axiale Gewindelänge. Dies ist ein Vorteil, der den gewissen Festigkeitsnachteil durch die Unterbrechungen des Gewindeganges 36 im Bereich der beiden Nuten 22 und 24 mehr als wettmachen kann.

Außerdem kann trotz des zusätzlichen Schrittes zur Erzeugung der Nuten 22 und 24 der eigentliche Gewindeerzeugungsprozess in einer kürzeren Zeit durchgeführt werden als mit konventionellen Gewindebohrern in einem kreisrunden Kernloch ohne Nuten 22 und 24.

Ferner kann durch die Nuten 22 und 24 in vorteilhafter Weise Kühl- und/oder Schmiermittel, insbesondere in Form von Öl oder Öl-Aerosol, zum Ort der Gewindeerzeugung geführt oder geleitet werden und auch zur Abfuhr der Späne verwendet werden. Ferner können auch zumindest die zuletzt erzeugten Späne von dem Gewindeschneidzahn in die jeweilige Nut 22 oder 24 eingebracht werden und dort mit vergleichsweise großem Volumen mit dem Kühl- und/oder Schmiermittel abgeführt. Zum Transport von Kühl- und/oder Schmiermittel zu bzw. von den Gewindeerzeugungsbereichen 32 und 34 bzw. zum Abtransport von Spänen von spanenden Gewindeerzeugungsbereichen 32 und 34 kann das Gewindeerzeugungswerkzeug 3 auch an oder zu den Gewindeerzeugungsbereichen 32 und 34 verlaufende Außennuten und/oder innere Kanäle aufweisen, die nicht dargestellt sind.

Das Kernloch 20 kann in den FIG 1 bis 5 sowohl ein Durchgangsloch als auch ein Sackloch sein. Die Wandung des Werkstücks kann somit wie dargestellt die Innenwandung eines durchgehenden oder nicht durchgehenden Loches in dem Werkstück sein zur Herstellung eines Innengewindes. Das Verfahren kann aber ebenso zur Herstellung eines Außengewindes verwendet werden, wobei dann die Nuten und anschließend das Gewinde in der Außenwandung eines Schaftes oder Bolzens oder dergleichen erzeugt werden und die Gewindeerzeugungsbereiche des Gewindeerzeugungswerkzeuges entsprechend an einer Innenfläche angeordnet oder nach innen gerichtet sind und von außen in die Außenwand des Werkstücks eingreifen. Das Gewindeerzeugungswerkzeug ist dann auch im Durchmesser größer als die Wandung des Werkstücks, während es bei einem Innengewinde kleiner ist.

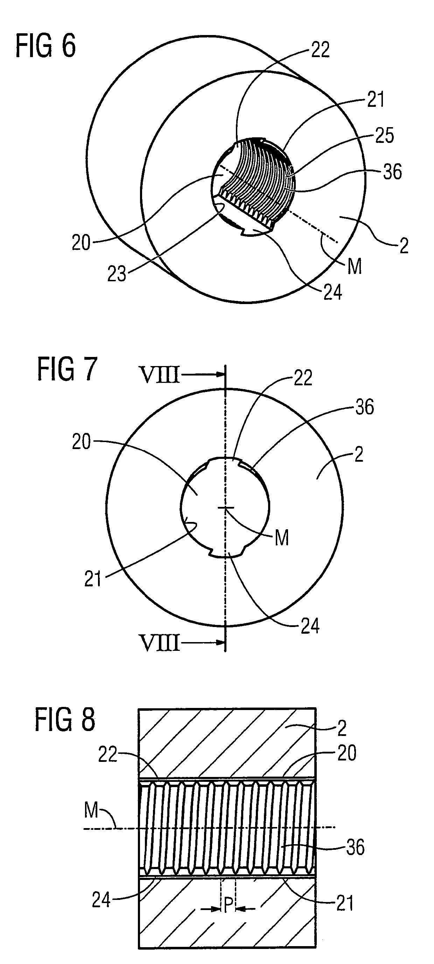

Die FIG 6 bis 8 zeigen ein mit dem Verfahren gemäß der Erfindung erzeugtes Gewinde in einem Durchgangsloch als Kernloch 20 bei bereits herausgezogenem Gewindeerzeugungswerkzeug 3.

Der Gewindegang 36 ist vollständig in den Wandungsteilbereichen 23 und 25 der Kernlochwandung 21 des Kernlochs 20 erzeugt und nur im Bereich der Nuten 22 und 24 unterbrochen. Die Mittelachse M des Kernloches 20 ist nun die Gewindeachse des erzeugten Gewindes mit dem (unterbrochenen) Gewindegang 36. In FIG 8 ist auch die Gewindesteigung P des Gewindeganges 36 eingezeichnet.

In einem nicht dargestellten Beispiel kann als Gewindeerzeugungswerkzeug anstelle eines modifizierten Gewindebohrers wie anhand von FIG 3 bis 5 gezeigt auch ein modifizierter Gewindefurcher verwendet werden, bei dem die Gewindeerzeugungsbereiche radial nach außen ragende Drückstollen oder Furchzähne statt Gewindeschneidzähnen aufweisen, welche Drückstollen oder Furchzähne den Gewindegang bei der ansonsten gleichen Drehbewegung und gleichzeitigen Vorschubbewegung des Gewindeerzeugungswerkzeugs spanlos durch plastische Eindrücken in die Kernlochwandung 21 erzeugen. Der Drückstollen kann insbesondere in der Mitte der Gewindeerzeugungsbereiche angeordnet sein wieder in einem radialen Abstand zum jeweiligen Nutgrund der Nuten.

Bevorzugte Werkstoffe des Werkstücks sind Metalle, insbesondere Aluminiumlegierungen und Magnesiumlegierungen und andere Leichtmetalle, jedoch ist die Erfindung nicht auf diese Werkstoffe beschränkt. Ferner kommen als Werkstücke sowohl dickwandige oder massive Werkstücke als auch dünnwandige Bauteile oder Bleche, insbesondere aus Stahl oder anderen Werkstoffen, in Betracht.

### Bezugszeichenliste

- 2: Werkstück
- 3: Gewindeerzeugungswerkzeug
- 20: Kernloch
- 21: Kernlochwandung
- 22, 24: Nut
- 22B, 24B: Nutgrund
- 23, 25: Wandungsbereich

- 32, 34: Gewindeerzeugungsbereich
- 32A, 34A: Gewindeschneidzahn
- 32B, 34B: Freifläche
- 33, 35: Außenfläche
- 36: Gewindegang

- A: Werkzeugachse
- D: Kernlochdurchmesser
- d: Werkzeugdurchmesser
- g: Spaltbreite
- S: Drehsinn
- M: Mittelachse
- P: Gewindesteigung
- t: Nuttiefe
- r: Radius
- h: radiale Höhe
- Δr: radialer Abstand
- α: Drehwinkel
- β, γ: Winkelanteil

## Patentansprüche

1. Verfahren zum Herstellen eines Gewindes in einem Werkstück mit den folgenden Verfahrensschritten:
a) Erzeugen einer Anzahl n ≥ 1 von Nuten (22, 24) in einer eine Gewindeachse (M) umlaufenden Wandung (21) des Werkstückes (2)
oder
Erzeugen einer eine Anzahl n ≥ 1 von Nuten aufweisenden und eine Gewindeachse umlaufenden Wandung des Werkstückes,
b) Einführen von jeweils einem Gewindeerzeugungsbereich (32, 34) eines Gewindeerzeugungswerkzeuges (3) in jede der Nuten (22, 24) in der Wandung des Werkstücks in Richtung entlang der zugehörigen Nut, wobei der Gewindeerzeugungsbereich in zur Gewindeachse radialer Richtung in die zugehörige Nut unter Einhaltung eines radialen Abstandes (Δr) zum Nutgrund (22B, 24B) ragt,
c) Erzeugen eines Gewindes (36) in jedem an die Nut(en) angrenzenden Wandungsteilbereich (23, 25) der Wandung des Werkstücks durch Drehen des Gewindeerzeugungswerkzeuges (3) um die Gewindeachse (M) um einen vorgegebenen Drehwinkel und gleichzeitigen axialen Vorschub des Gewindeerzeugungswerkzeuges koaxial zur Gewindeachse mit einer an die Drehgeschwindigkeit der Drehbewegung und die Gewindesteigung angepassten axialen Vorschubgeschwindigkeit, wobei während der Drehung und dem gleichzeitigen axialen Vorschub jeder Gewindeerzeugungsbereich in den zugehörigen Wandungsteilbereich eingreift und einen zugehörigen Teil eines Gewindeganges erzeugt und nach der Drehung wieder in dieselbe Nut oder eine andere Nut in der Wandung ragt,
d) Herausbewegen jedes Gewindeerzeugungsbereiches (32, 34) des Gewindeerzeugungswerkzeuges aus der zugehörigen Nut (24, 22) in Richtung entlang der Nut,
e) wobei die n Nuten in einem gleichen Winkelabstand von 360°/n zueinander erzeugt werden und
f) **dadurch gekennzeichnet, dass** der Drehwinkel 720°/n oder 1080°/n beträgt.

2. Verfahren nach Anspruch 1 mit wenigstens einem oder einer beliebigen Kombination der folgenden Merkmale:
a) jede Nut wird im Wesentlichen als parallel zur Gewindeachse verlaufende axiale Nut erzeugt,
b) jede Nut wird spanabhebend erzeugt, insbesondere mit einem in Richtung der Nut bewegten Räum- oder Hobelwerkzeug wie einer Räumnadel oder auch mit einem Fräser, insbesondere Nutfräser.

3. Verfahren nach einem der vorhergehenden Ansprüche mit wenigstens einem der folgenden Merkmale:
a) wenigstens ein Gewindeerzeugungsbereich ist ein Gewindeformbereich und erzeugt seinen Teil des Gewindeganges formend und damit spanlos,
b) wenigstens ein Teil der Gewindeerzeugungsbereiche (32 und 34) des Gewindeerzeugungswerkzeugs (3) weisen auf einer dem zu erzeugenden Gewinde in der Gewindesteigung entsprechenden Schraubenlinie um die Werkzeugachse (A) angeordnete Gewindedrückstollen auf, die innerhalb des Gewindeerzeugungsbereiches radial am Weitesten nach außen ragen,

4. Verfahren nach einem der vorhergehenden Ansprüche mit wenigstens einem oder einer beliebigen Kombination der folgenden Merkmale:
a) wenigstens ein Gewindeerzeugungsbereich ist ein Gewindeschneidbereich und erzeugt seinen Teil des Gewindeganges spanabhebend,
b) wenigstens eine Teil der Gewindeerzeugungsbereiche (32 und 34) des Gewindeerzeugungswerkzeugs (3) weisen auf einer dem zu erzeugenden Gewinde in der Gewindesteigung entsprechenden Schraubenlinie um die Werkzeugachse (A) angeordnete Gewindeschneidzähne (32A bzw. 34A) auf, die innerhalb des Gewindeerzeugungsbereiches radial am Weitesten nach außen ragen, wobei sich an die Gewindeschneidzähne (32A, 34A) in Richtung entgegengesetzt zur Schneidrichtung oder Drehrichtung vorzugsweise äußere Freiflächen (32B, 34B) anschließen,

5. Verfahren nach einem der vorhergehenden Ansprüche, wobei die Gewindeerzeugungsbereiche (32 und 34) des Gewindeerzeugungswerkzeugs (3) ragen radial weiter nach außen als die übrigen Außenflächen (33, 35) des Gewindeerzeugungswerkzeugs (3).

6. Verfahren nach einem der vorhergehenden Ansprüche, bei dem die Wandung des Werkstückes, in der das Gewinde erzeugt wird, eine Kernlochwandung eines Kernloches, insbesondere eines Sackloches oder eines Durchgangsloches, in dem Werkstück ist.

7. Verfahren nach Anspruch 6, bei dem die die Wandung des Werkstückes und die Nuten in der Wandung gemeinsam in einem Bearbeitungsverfahrensschritt oder mit einem Bearbeitungswerkzeug, insbesondere einem Fräser, erzeugt werden.

## Claims

1. Method for producing a thread in a workpiece with the following method steps:
a) producing a number n ≥ 1 of grooves (22, 24) in a wall (21) of the workpiece (2) running around a thread axis (M)
or
producing a wall of the workpiece having a number n ≥ 1 of grooves and running around a thread axis of the workpiece;
b) introducing in each case a thread-producing region (32, 34) of a thread-producing tool (3) into each of the grooves (22, 24) in the wall of the workpiece in the direction along the associated groove, wherein the thread-producing region projects in the radial direction to the thread axis into the associated groove while maintaining a radial distance (Δr) to the groove base (22B, 24B);
c) producing a thread (36) in each wall sub-region (23, 25) of the wall of the workpiece adjoining the groove(s) by rotating the thread-producing tool (3) about the thread axis (M) at a specified angle of rotation and simultaneously axially feeding the thread-producing tool coaxially to the thread axis at an axial feed speed adapted to the rotational speed of the rotational movement, wherein during the rotation and the simultaneous axial feed each thread-producing region projects into the associated wall sub-region and produces an associated part of a thread and following rotation projects into the same groove again or into another groove in the wall;
d) moving each thread-producing region (32, 34) of the thread-producing tool out of the associated groove (24, 22) in the direction along the groove;
e) wherein the n grooves are produced at the same angular distance of 360°/n to each other; and
f) **characterised in that**
the angle of rotation is 720°/n or 1,080°/n.

2. Method according to claim 1 with at least one or any combination of the following features:
a) each groove is substantially produced as an axial groove running parallel to the thread axis;
b) each groove is produced by machining, in particular with a broaching or planning tool, such as a broach or a slot mill, moved in the direction of the groove.

3. Method according to any one of the preceding claims with at least one of the following features:
a) at least one thread-producing region is a thread-form region and produces its part of the thread formatively and thus without cutting,
b) at least a part of the thread-forming regions (32 and 34) of the thread-producing tool (3) has thread-spinning studs arranged about the tool axis (A) in a helix corresponding to the thread pitch of the thread to be produced, which project radially furthest outwards within the thread-producing region.

4. Method according to any one of the preceding claims with at least one or any combination of the following features:
a) at least one thread-producing region is a thread-cutting region and produces part of the thread by cutting;
b) at least part of the thread-producing regions (32 and 34) of the thread-producing tool (3) has thread-cutting teeth (32A or 34A) arranged about the tool axis (A) in a helix corresponding to the pitch of the thread to be produced, which project radially furthest outwards within the thread-producing region, wherein the thread-cutting teeth (32A, 34A) in the direction opposite to the cutting direction or direction of rotation are preferably adjoined by external free spaces (32B, 34B).

5. Method according to any one of the preceding claims, wherein the thread-producing regions (32 and 34) of the thread-producing tool (3) project radially further outwards than the other external surfaces (33, 35) of the thread-producing tool (3).

6. Method according to any one of the preceding claims, in which the wall of the workpiece, in which the thread is produced, is a core hole wall of a core hole, in particular a blind hole or a through-hole in the workpiece.

7. Method according to claim 6, in which the wall of the workpiece and the grooves in the wall are produced jointly in a machining method step or with a machining tool, in particular a mill.

## Revendications

1. Procédé pour fabriquer un filetage dans une pièce à usiner, comprenant les étapes suivantes consistant à :
a) produire un nombre n ≥ 1 de rainures (22, 24) dans une paroi (21) entourant un axe de filetage (M) de la pièce à usiner (2)
ou
produire une paroi de la pièce à usiner présentant un nombre n ≥ 1 de rainures et entourant un axe de filetage,
b) introduire respectivement une zone de production de filetage (32, 34) d'un outil de production de filetage (3) dans chacune des rainures (22, 24) dans la paroi de la pièce à usiner dans la direction le long de la rainure associée, dans lequel la zone de production de filetage dépasse, dans une direction radiale par rapport à l'axe de filetage, dans la rainure associée en respectant une distance radiale (Δr) par rapport à la base de rainure (22B, 24B),
c) produire un filetage (36) dans chaque zone partielle de paroi (23, 25), jouxtant la/les rainures(s), de la paroi de la pièce à usiner en tournant l'outil de production de filetage (3) autour de l'axe de filetage (M) d'un angle de rotation prédéfini et d'une avancée axiale simultanée de l'outil de production de filetage de manière coaxiale par rapport à l'axe de filetage à une vitesse d'avancée axiale adaptée à la vitesse de rotation du déplacement par rotation et au pas de filetage, dans lequel chaque zone de production de filetage vient en prise avec la zone partielle de paroi associée au cours de la rotation et de l'avancée axiale simultanée et produit une partie associée d'un pas de filetage et dépasse à nouveau dans la même rainure ou dans une autre rainure dans la paroi après la rotation,
d) déplacer chaque zone de production de filetage (32, 34) de l'outil de production de filetage en dehors de la rainure (24, 22) associée en direction le long de la rainure,
e) dans lequel les n rainures sont produites à une distance angulaire égale de 360°/n les unes par rapport aux autres, et
f) **caractérisé en ce que** l'angle de rotation est égal à 720°/n ou 1080°/n.

2. Procédé selon la revendication 1, comprenant au moins une ou une combinaison quelconque des caractéristiques suivantes :
a) chaque rainure est produite sensiblement sous la forme d'une rainure axiale s'étendant de manière parallèle par rapport à l'axe de filetage,
b) chaque rainure est produite par enlèvement de copeaux, en particulier avec un outil de brochage ou de rabotage déplacé en direction de la rainure, tel qu'une broche ou encore avec une fraise, en particulier une fraise à rainer.

3. Procédé selon l'une quelconque des revendications précédentes, comprenant au moins une des caractéristiques suivantes :
a) au moins une zone de production de filetage est une zone de formage de filetage et produit sa partie de la spire de filetage par formage et ainsi sans enlèvement de copeaux,
b) au moins une partie des zones de production de filetage (32 et 34) de l'outil de production de filetage (3) présente, sur une ligne de vissage correspondant au filetage à produire dans le pas de filetage, des crampons de pression de filetage disposés autour de l'axe d'outil (A), qui dépassent de manière radiale le plus loin vers l'extérieur à l'intérieur de la zone de production de filetage.

4. Procédé selon l'une quelconque des revendications précédentes, comprenant au moins une ou une combinaison quelconque des caractéristiques suivantes :
a) au moins une zone de production de filetage est une zone de découpe de filetage et produit sa partie de la spire de filetage par enlèvement de copeaux,
b) au moins une partie des zones de production de filetage (32 et 34) de l'outil de production de filetage (3) présente, sur une ligne de vissage correspondant au filetage à produire dans le pas de filetage, des dents de découpe de filetage (32A ou 34A) disposées autour de l'axe d'outil (A), qui dépassent de manière radiale le plus loin vers l'extérieur à l'intérieur de la zone de production de filetage, dans lequel des surfaces libres (32B, 34B) de préférence extérieures se raccordent aux dents de découpe de filetage (32A, 34A) en direction à l'opposé de la direction de découpe ou de la direction de rotation.

5. Procédé selon l'une quelconque des revendications précédentes, dans lequel les zones de production de filetage (32 et 34) de l'outil de production de filetage (3) dépassent de manière radiale davantage vers l'extérieur que les autres surfaces extérieures (33, 35) de l'outil de production de filetage (3).

6. Procédé selon l'une quelconque des revendications précédentes, la paroi de la pièce à usiner, dans laquelle le filetage est produit, étant une paroi d'avant-trou d'un avant-trou, en particulier d'un trou borgne ou d'un trou de passage dans la pièce à usiner.

7. Procédé selon la revendication 6, la paroi de la pièce à usiner et les rainures dans la paroi étant produites conjointement lors d'une étape de procédé d'usinage ou avec un outil d'usinage, en particulier une fraise.
